(19) Europäisches Patentamt
European Patent Office
Office européen des brevets

(11) **EP 1 544 793 B1**

## (12) FASCICULE DE BREVET EUROPEEN

(45) Date de publication et mention
de la délivrance du brevet:
**19.05.2010 Bulletin 2010/20**

(51) Int Cl.:
**G06T 5/20** (2006.01)  **H04N 1/62** (2006.01)
**H04N 1/60** (2006.01)

(21) Numéro de dépôt: **04292868.9**

(22) Date de dépôt: **03.12.2004**

(54) **Procédé et système d'amélioration de la qualité d'images numériques surexposées**

Verfahren und System zur Qualitätsverbesserung von überbelichteten digitalen Bildern

Method and system of improving the quality of overexposed digital images

(84) Etats contractants désignés:
**DE ES FR GB IT**

(30) Priorité: **19.12.2003 FR 0314941**

(43) Date de publication de la demande:
**22.06.2005 Bulletin 2005/25**

(73) Titulaire: **SAGEM COMMUNICATIONS SAS**
**92848 Rueil Malmaison Cedex (FR)**

(72) Inventeur: **Cabestan, Emmanuel**
**78700 Conflans Sainte Honorine (FR)**

(74) Mandataire: **Debay, Yves**
**Cabinet Debay**
**126 Elysée 2**
**78170 La Celle Saint Cloud (FR)**

(56) Documents cités:
**US-A- 4 642 678      US-A- 5 130 789**
**US-A1- 2002 141 640**

• **HARVEY A L ET AL: "Colour image restoration by a nearest good neighbour method" CONFERENCE PROCEEDINGS DICTA-93 DIGITAL IMAGE COMPUTING: TECHNIQUES AND APPLICATIONS AUSTRALIAN PATTERN RECOGNITION SOC BROADWAY, NSW, AUSTRALIA, vol. 2, décembre 1993 (1993-12), pages 745-747 vol.2, XP008045273 ISBN: 0-646-16522-4**

**Description**

DOMAINE TECHNIQUE DE L'INVENTION

La présente invention se rapporte au domaine des méthodes d'amélioration d'images reçues dans le domaine colorimétrique luminance/chrominance YCbCr. L'invention concerne plus particulièrement un procédé et un système de diminution de la surexposition du flash pour améliorer la qualité d'images numériques.

ARRIERE-PLAN TECHNOLOGIQUE DE L'INVENTION

Typiquement, une image numérique se compose d'une pluralité d'éléments d'images appelés pixels. Une image peut être ainsi représentée par une grille ou matrice de pixels selon un axe horizontal et un axe vertical, des lignes horizontales étant numérotées à partir de 0 le long l'axe vertical et des colonnes verticales numérotées à partir de 0 le long de l'axe horizontal. Autrement dit, chaque pixel est identifié par le numéro de sa ligne et le numéro de sa colonne. Les pixels sont considérés comme ayant une couleur unique uniforme. Cette couleur est dès lors également convertie en données.

Un espace colorimétrique qui est très pratique d'utilisation pour le traitement d'images en couleur est le domaine de représentation luminance/chrominance. Chaque couleur est représentée par une composante de luminance Y, avec une valeur d'intensité lumineuse, et une composante de chrominance. Cette composante de chrominance est typiquement représentée par deux coefficients, le coefficient Cb pour le signal contenant les informations de couleur bleu et le coefficient Cr pour le signal contenant les informations de couleur rouge.

Ainsi, chaque pixel de coordonnées (i, j) dans la matrice de pixels se caractérise par les valeurs de sa composante de luminance Y et les composantes de chrominance Cb et Cr.

Actuellement, il existe dans le domaine du traitement d'image des méthodes génériques de filtrage pour modifier la couleur des pixels. Ces méthodes ne sont pas adaptées pour régler les problèmes de surexposition dus au flash d'un appareil photo numérique.

Ainsi, il est connu par le document GB 2 357 001 une méthode de filtrage appliquée pour des pixels d'une forme numérique d'une image qui sont sélectionnés en fonction d'un seuil particulier de luminance. Deux types de filtrage sont distingués selon le dépassement d'un premier seuil ou d'un deuxième seuil de luminance.

Dans l'art antérieur, il est connu des procédés permettant de modifier la valeur de certains pixels considérés en leur attribuant les valeurs des pixels immédiatement voisins dans la matrice de pixels. De tels procédés, comme celui décrit par exemple dans le document US 6 510 242, s'apparentent à un filtrage localisé et ne conviennent pas pour traiter la surexposition au flash.

Le problème des photos numériques pour lesquelles une partie de l'image est trop éclairée à cause du flash est pourtant rencontré fréquemment, d'où l'intérêt de proposer une méthode efficace pour améliorer la qualité d'images numériques présentant des pixels surexposés.

La demande de brevet américain US 2002/0150306 enseigne une méthode permettant d'utiliser une photo prise avec flash et une photo prise sans flash pour générer une image représentant la différence entre les images issues des deux photos. Après un traitement très spécifique, cette image de différence est soustraite de l'image correspondant à la photo prise avec flash. Cette méthode, nécessitant une comparaison entre deux images, n'est absolument pas adaptée pour traiter des images uniquement obtenues à partir de photos prises avec le flash.

Il est également connu, par le document Harley Alan L et Cohen Harvey A « Colour image restoration by nearest good neighbour method » ; Conférence proceedings DICTA-93, Digital Image Computing : Techniques and Applications, Australian Pattern Recognition Soc Broadway, NSW, AUSTRALIA, vol. 2, décembre 1993, pages 745-747, une méthode de traitement d'images en recherchant un bon pixel voisin parmi les pixels proches pour restaurer des images en couleur altérées par un signal de bruit. Il est nécessaire dans un premier temps de classifier les pixels en « bons » ou « mauvais » pixels. Ensuite, les caractéristiques des mauvais pixels sont remplacées par celles du bon pixel déterminé comme le plus proche. Cette méthode ne permet pas d'atteindre une qualité satisfaisante pour des photos prises avec flash.

DESCRIPTION GENERALE DE L'INVENTION

La présente invention a donc pour objet de supprimer un ou plusieurs des inconvénients de l'art antérieur en définissant un procédé d'amélioration de la qualité d'images numériques spécialement adapté pour diminuer l'effet de la surexposition d'un flash lors d'une prise de vue.

A cet effet, l'invention concerne un procédé selon la revendication 1.

Selon une autre particularité, le procédé est tel que défini dans les revendications 2 à 11.

Un autre objet de l'invention est de supprimer un ou plusieurs des inconvénients de l'art antérieur en définissant un système de traitement d'image adapté pour diminuer l'effet de la surexposition au flash et améliorer ainsi la qualité de l'image.

A cet effet, l'invention propose un système selon la revendication 12.

Selon une autre particularité, le système est tel que défini dans les revendications 13 à 18.

Selon une autre particularité, les moyens de transformation de données sont aptes à utiliser un coefficient d'atténuation strictement inférieur à 1 paramétré et stocké dans l'unité de mémorisation afin d'abaisser la valeur de la composante de luminance selon un programme ou un circuit mettant en oeuvre l'équation suivante :

$$Y = Yseuil + (y - Yseuil)*K$$

où Y désigne la luminance atténuée du pixel surexposé, y désigne la luminance non atténuée, Yseuil désigne le seuil fixé et K désigne le coefficient d'atténuation strictement inférieur à 1.

Selon une autre particularité, lequel le seuil fixé pour la composante de luminance est compris entre 185 et 220 pour une dynamique comprise entre 0 et 255 et le coefficient d'atténuation est compris entre 0,6 et 0,95.

L'invention, avec ses caractéristiques et avantages, ressortira plus clairement à la lecture de la description faite en référence aux dessins annexés dans lesquels :

- la figure 1 représente un mode de réalisation du système de traitement d'image selon l'invention,
- la figure 2 représente un logigramme de déroulement des étapes du processus selon l'invention d'amélioration de la qualité d'image. De plus, l'annexe illustre un exemple de programme d'implémentation susceptible d'être utilisé dans la présente invention.

DESCRIPTION DES MODES DE REALISATION PREFERES DE L'INVENTION

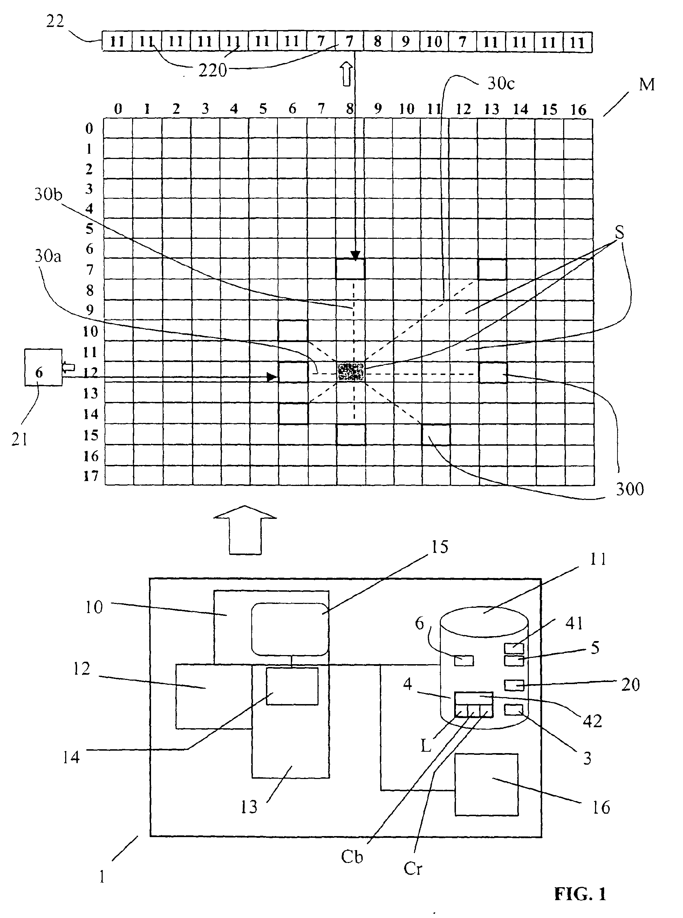

L'invention va être à présent décrite en référence à la figure 1.

Le système (1) de traitement d'image représenté sur la figure 1 peut être incorporé dans un appareil doté soit de moyens d'affichage de l'image soit de moyens d'impression. Le système (1) comprend une unité de mémorisation (11) apte à stocker une forme numérique d'une image captée (5) et un module (10) générateur de matrice de pixels. L'image est par exemple initialement captée par un capteur doté d'un circuit optoélectronique ou tout autre capteur connu. L'image est convertie en signal analogique, puis échantillonnée et codée sur un certain nombre de bits. Le module (10) est agencé pour produire au moins une matrice de pixels (M) à partir à partir de cette image captée (5) qui se présente par exemple sous une forme numérique composée d'une série de pixels. Des données (41) représentatives d'une telle matrice de pixels (M) sont mémorisées dans l'unité de mémorisation (11).

Pour améliorer la qualité d'une image numérique, le système (1) de traitement d'image est capable de transformer l'image en réalisant une correction dans le domaine colorimétrique YCbCr. Ce domaine permet de travailler séparément la couleur et la luminance, et plus précisément de travailler la couleur en modifiant des valeurs de coefficients de chrominance bleu et rouge (Cb, Cr). Pour cela, le système (1) de traitement d'image comporte des moyens de transformation (15) de données permettant de modifier les propriétés attribuées à un pixel par remplacement des valeurs de la composante de luminance (L) et des coefficients de chrominance (Cb, Cr). Dans un mode de réalisation de l'invention, l'unité de mémorisation (11) stocke des données (L, Cb, Cr) dites de couleur représentatives pour chacun des pixels de la matrice (M) d'une composante de luminance (L) et d'une composante de chrominance représentée par au moins deux coefficients (Cb, Cr). Dans l'exemple de la figure 1, ces données (L, Cb, Cr) de couleur correspondant aux propriétés de chaque pixel de la matrice de pixels (M) sont mémorisées sous forme de tables (4) dans l'unité de mémorisation (11). Chacune des tables (4) inclut en outre des données (42) représentatives des coordonnées du pixel dans la matrice (M). Chaque valeur possible de luminance est codée par exemple sur 8 bits. A chacun des pixels peut être ainsi attribuée une valeur codée particulière comprise entre 0 et 255 pour représenter la composante de luminance.

Dans le but d'offrir une solution adaptée au problème de la surexposition au flash, la modification de ces propriétés doit être réalisée uniquement sur les pixels surexposés (S) et consister en un ajout pertinent de couleur. Pour trouver les valeurs appropriées de remplacement pour les coefficients de chrominance (Cb, Cr), l'invention propose une méthode originale consistant à chercher selon une pluralité d'orientations (30) autour du pixel surexposé (S) les pixels voisins (300) les plus proches qui ne sont pas surexposés, comme représenté sur la figure 1.

Dans le mode de réalisation préféré de l'invention, le système (1) de traitement d'image comporte des moyens de sélection (12) pour sélectionner dans la matrice de pixels (M) des pixels dits surexposés (S) ayant la valeur codée de leur composante de luminance (L) supérieure un seuil fixé (3). Ce seuil fixé (3) pour la composante de luminance (L) est paramétré et mémorisé dans l'unité de mémorisation (11). Pour une dynamique comprise entre 0 et 255 pour les valeurs particulières de composante de luminance attribuées aux pixels de l'image, le seuil (3) fixé pour la composante de luminance (L) est compris entre 185 et 220, par exemple 200.

Pour rechercher les pixels voisins (300) les plus proches qui ne sont pas surexposés, le système (1) selon l'invention est doté de moyens de détection (13) aptes à détecter pour chaque pixel surexposé (S), suivant au moins deux orientations distinctes (30) prises à partir du pixel surexposé (S), le pixel non surexposé (300) le plus proche. Ainsi, selon chacune des orientations (30), un pixel non surexposé (30) qui n'est pas forcément immédiatement voisin du pixel surexposé (S) sera trouvé et ses valeurs pour les coefficients de chrominance (Cb, Cr) seront éventuellement utilisées afin de réaliser un ajout pertinent de couleur pour ce pixel surexposé (S). Les valeurs des coefficients de chrominance (Cb, Cr) du pixel surexposé (S) seront également éventuellement utilisées, de la même façon que les valeurs trouvées pour les pixels voisins non surexposés (300), afin que l'ajout de couleur soit le plus pertinent possible.

Dans un mode de réalisation de l'invention, des valeurs de chrominance trop élevées ou trop basses parmi les valeurs trouvées ne sont pas prises en compte dans le remplacement des valeurs des coefficients de chrominance (Cb, Cr) du pixel surexposé (S). Le système (1) de traitement d'image comporte en effet un module de calcul (14) permettant, pour chaque pixel surexposé (S), de comparer les valeurs respectives attribuées pour chacun des deux coefficients de chrominance (Cb, Cr), au pixel surexposé (S) et aux pixels non surexposés détectés (300). Ce module de calcul (14) permet également de discriminer parmi les pixels comparés (S, 300) ceux qui ont la valeur de coefficient de chrominance (Cb, Cr) la plus élevée, respectivement la valeur de coefficient de chrominance (Cb, Cr) la plus faible. Le module de calcul (14) peut en outre calculer pour chaque pixel surexposé (S) deux moyennes (MCb, MCr) réalisées à partir des valeurs des pixels non discriminés attribuées au coefficient de chrominance bleu (Cb), respectivement au coefficient de chrominance rouge (Cr).

Dans un mode de réalisation préféré de l'invention, les moyens de transformation (15) de données sont agencés pour transformer des données (L, Cb, Cr) de couleur correspondant aux pixels surexposés (S), par abaissement de la valeur de la composante de luminance (L) et remplacement pour chaque pixel surexposé (S) de la valeur de chacun des deux coefficients de chrominance (Cb, Cr) par une moyenne respective (MCb, MCr) des valeurs de coefficient des pixels non discriminés calculée par le module de calcul (14). Autrement dit, les moyens de transformation (15) de données permettent d'agir séparément sur l'intensité lumineuse et sur les coefficients de chrominance (Cb, Cr) des pixels surexposés (S). On comprend que pour les pixels surexposés (S) ainsi traités, la transformation relative à la composante de luminance (L) correspond à un abaissement de l'intensité lumineuse et la transformation relative aux coefficients de chrominance (Cb, Cr) correspond à un ajout de couleur.

Les moyens de transformation (15) de données sont aptes à utiliser un coefficient d'atténuation de la valeur de la composante de luminance (L) qui est strictement inférieur à 1, paramétré et stocké dans l'unité de mémorisation (11). Les moyens de transformation permettent ainsi d'abaisser la valeur de la composante de luminance (L), en mettant en oeuvre par un programme ou par un circuit électronique l'équation suivante :

$$Y = Yseuil + (y - Yseuil)^*K$$

où Y désigne la luminance atténuée du pixel surexposé (S), y désigne la luminance non atténuée, Yseuil désigne le seuil fixé (3) et K désigne le coefficient d'atténuation strictement inférieur à 1. Ce coefficient d'atténuation est compris par exemple entre 0,6 et 0,95. La luminance des pixels surexposés (S) ne doit pas être trop diminuée afin de ne pas perdre trop de détails dans la zone de l'image surexposée au flash.

Comme représenté à la figure 1, le système (1) de traitement d'image comporte une unité d'utilisation (16) des valeurs de remplacement des composantes de chrominance (Cb, Cr) et les valeurs abaissées des composantes de luminance (L) pour modifier la qualité de l'image captée (5). Cette unité d'utilisation (16) peut permettre par exemple de former une image de qualité améliorée et générer un fichier image modifiée (6) dont les données sont soit mémorisées dans l'unité de mémorisation (11), soit affichées ou imprimées par l'intermédiaire de moyens d'affichage ou de moyens d'impression d'un appareil relié à cette unité d'utilisation (16).

Comme représenté à la figure 1, les moyens de sélection (12) peuvent être agencés pour sélectionner les pixels surexposés (S) ligne par ligne en parcourant tous les pixels de la matrice de pixels (M). Ces moyens de sélection (12) déclenchent par exemple la sauvegarde, dans l'unité de mémorisation (11 ), de données représentatives des tables (4) correspondant aux pixels non surexposés parcourus. Les moyens de détection (13) peuvent ensuite utiliser ces données sauvegardées pour détecter les pixels non surexposés (300) les plus proches d'un pixel surexposé (S). Une telle utilisation de données sauvegardées relatives aux pixels non surexposés déjà parcourus permet d'accélérer la détection des pixels non surexposés suivant l'orientation horizontale vers la gauche et suivant l'orientation verticale vers le haut, dans le cas d'une sélection dans la matrice (M) commençant par le haut et avec un parcours de gauche à droite des pixels. Pour un tel sens de parcours, le pixel à détecter en haut et le pixel à détecter à gauche ont en effet déjà été parcourus. Ainsi, comme représenté à la figure 1, dans la direction verticale de bas en haut (30b) passant par le pixel surexposé [8, 12] de la huitième colonne et de la douzième ligne, la valeur de sauvegarde sera celle des coefficients de chrominance du pixel [8, 7] non surexposé. On mémorise de même, pour la direction vers la gauche (30a), une valeur de sauvegarde correspondant au pixel [6, 12].

Une ligne de sauvegarde (22) permet d'indiquer colonne par colonne, pour chaque pixel de la ligne 12 dans l'exemple de la figure 1, les numéros de ligne (220) des derniers pixels non surexposés des lignes précédemment parcourues. Les coefficients de ces derniers pixels non surexposés dernièrement parcourus sont mémorisés en sauvegarde pour la direction ascendante (30b). Les recherches vers le haut et vers la gauche des pixels voisins non surexposés sont ainsi optimisées. En variante, on peut optimiser une autre orientation, par exemple la recherche vers la droite. Le type d'optimisation décrit ci-dessus ne peut pas en revanche être utilisé selon l'orientation (30c) ou d'autres orientations en diagonale.

Les moyens de sélection (12) sont par exemple agencés pour sauvegarder des données (20) de position des pixels non surexposés et ces données (20) sont représentatives desdites lignes de sauvegarde (22). Dans un mode de réalisation de l'invention, ces lignes de sauvegarde (22) correspondent chacune à une ligne déterminée de la matrice de pixels (M). Elles reportent d'une part les numéros de ligne (220) de chacun des pixels non surexposés situés vers le haut à proximité de cette ligne déterminée et d'autre part le numéro de colonne (21) du premier pixel de la ligne déterminée non surexposé vers la gauche.

Dans le mode de réalisation de la figure 1, les moyens de détection (13) utilisent naturellement la ligne de sauvegarde pour détecter, à partir d'un pixel surexposé (S), les pixels voisins non surexposé (300) situés à gauche et au-dessus. Pour les autres orientations (30), la détection s'effectue en parcourant la matrice de pixels (M).

Dans une variante de réalisation, les moyens de sélection (12) sont agencés pour sélectionner les pixels surexposés (S) d'une façon analogue en procédant colonne par colonne. De même, les moyens de détection (13) utilisent les données sauvegardées pour détecter les pixels non surexposés (300) les plus proches d'un pixel surexposé (S).

Dans le mode de réalisation de la figure 1, les moyens de détection (13) sont agencés pour parcourir la matrice de pixels (M) à partir d'un pixel surexposé (S) selon des orientations distinctes (30) choisies parmi les huit orientations suivantes :

- orientations à gauche et à droite dudit pixel surexposé (S) suivant des lignes horizontales de la matrice de pixels (M) ;
- orientations en haut et en bas dudit pixel surexposé (S) suivant des colonnes verticales de la matrice de pixels (M) ;
- selon les diagonales de la matrice de pixels (M), orientations en bas et à gauche, en haut et à gauche, en haut et à droite, en bas et à droite.

On comprend que pour chaque pixel surexposé (S), il est possible de recueillir pour chaque coefficient de chrominance (Cb, Cr) jusqu'à neuf valeurs, en incluant celle du pixel surexposé (S) lui-même, pouvant être utilisées pour obtenir une valeur de remplacement du coefficient.

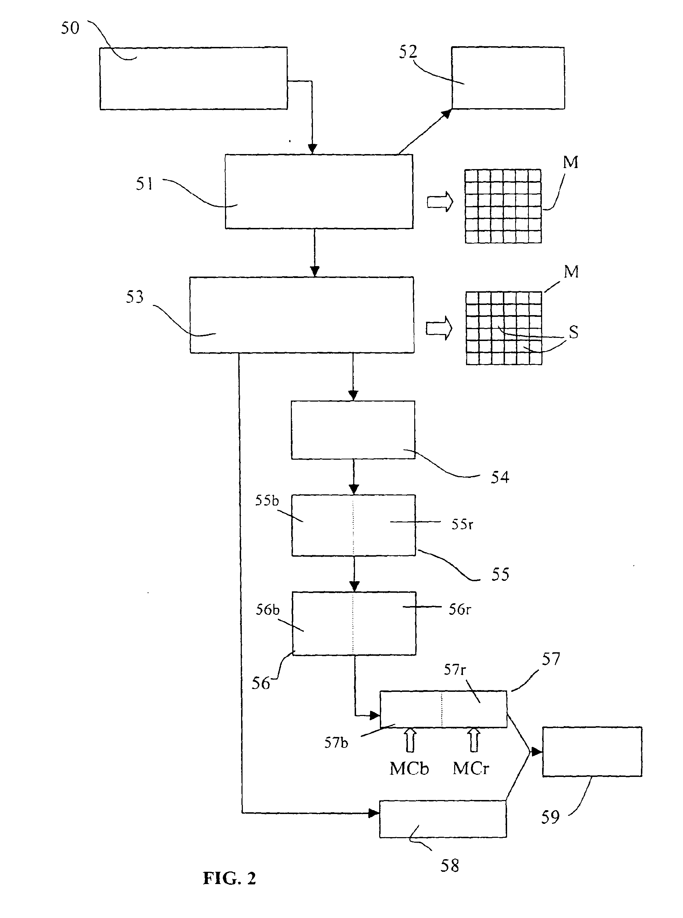

Le procédé de l'invention va être à présent décrit en référence à la figure 2.

Le procédé selon l'invention peut être mis en oeuvre par le système (1) de traitement d'image de la figure 1, qui est par exemple incorporé dans un appareil doté soit de moyens d'affichage de l'image soit de moyens d'impression de cette image.

Comme représenté à la figure 2, une forme numérique d'une image captée (5) est préalablement stockée dans l'unité de mémorisation (11) lors d'une étape (50) de mémorisation de l'image captée (5). Une étape (51) de production d'une matrice de pixels (M) est ensuite exécutée par le module (10) générateur de matrice à partir de cette image captée (5). Le procédé comporte une étape (52) de stockage dans l'unité de mémorisation (11) de la matrice de pixels (M) produite par le module (10) générateur de matrice. Des données (L, Cb, Cr) dites de couleur, représentatives pour chacun des pixels de la matrice (M) d'une composante de luminance (L) et d'une composante de chrominance représentée par au moins deux coefficients (Cb, Cr), sont également stockées dans l'unité de mémorisation (11). Ces données (L, Cb, Cr) de couleur se rattachent par exemple aux pixels de la matrice (M) par l'intermédiaire des coordonnées des pixels.

Les pixels surexposés (S) sont sélectionnés au cours d'une étape (53) de sélection réalisée dans la matrice de pixels (M) par les moyens de sélection (12) du système (1) de traitement d'image. Les pixels surexposés (S) sont sélectionnés en fonction de leur valeur pour la composante de luminance (L), qui doit être supérieure au seuil fixé (3). Les pixels surexposé (S) ainsi sélectionnés subissent ensuite deux traitements indépendant : d'une part, une étape (58) d'atténuation réalisée par les moyens de transformation (15) de données pour abaisser la valeur de la composante de luminance (L) des pixels surexposés (S), et d'autre part, un processus pour trouver des valeurs de coefficient de chrominance (Cb, Cr) pertinentes de façon à remplacer les valeurs en cours pour le pixel surexposé (S) par de nouvelles valeurs déterminées.

Ce processus, dont un exemple est explicité en annexe, débute avec une étape (54) de détection dans la matrice de pixels (M), réalisée par les moyens de détection (13) du système (1), consistant à trouver les pixels non surexposés les plus proches (300) du pixel surexposé courant, selon au moins deux orientations (30) distinctes. Selon chacune des orientations prises à partir du pixel surexposé (S), un pixel non surexposé est donc retenu.

Ensuite, une étape (55) de comparaison à des extrema puis une étape (56) de discrimination sont réalisées pour éliminer les pixels ayant un maximum ou un minimum pour chacun des deux coefficients de chrominance (Cb, Cr), afin d'éliminer les valeurs de coefficient extrêmes. L'étape (55) de comparaison se subdivise en deux sous-étapes (55b, 55r) pour traiter indépendamment chacun des coefficients de chrominance (Cb, Cr), correspondant aux chrominances bleu et rouge. Le module de calcul (14) compare les valeurs du coefficient de chrominance (Cb, Cr) pour le pixel surexposé (S) ainsi que pour les pixels détectés (300). Comme indiqué dans l'annexe, cette comparaison peut être réalisée de manière successive pour déterminer la valeur maximale, respectivement la valeur minimale. Deux sous-étapes (56b, 56r) de discrimination suivent, comme représenté à la figure 2, pour discriminer chacune parmi les pixels comparés (S, 300) ceux qui ont la valeur de coefficient de chrominance (Cb, Cr) la plus élevée, respectivement la valeur de coefficient de chrominance (Cb, Cr) la plus faible.

Dès lors, le processus se poursuit par une étape (57) de remplacement, réalisée par lesdits moyens de transformation (15) de données, consistant à remplacer les valeurs des coefficients de chrominance (Cb, Cr) dudit pixel surexposé (S) par les moyennes (MCb, MCr) respectives des valeurs de coefficient (Cb, Cr) obtenues à partir des pixels non discriminés. Comme représenté à la figure 2 et explicité à la fin de l'annexe, un calcul de la valeur moyenne de remplacement est réalisé pour chacun des deux coefficients de chrominance (Cb, Cr). L'étape (57) de remplacement peut donc se décomposer en deux sous-étapes (57b, 57r) permettant chacune de remplacer la valeur d'un des coefficients de chrominance (Cb, Cr) d'un pixel surexposé. On comprend que l'étape (54) de détection, l'étape (55) de comparaison, l'étape (56) de discrimination et l'étape (56) de remplacement peuvent être réitérées pour l'ensemble des pixels surexposés (S) sélectionnés lors de l'étape (53) de sélection.

Le procédé comprend par exemple une dernière étape (59) d'utilisation des valeurs de remplacement des composantes de chrominance (Cb, Cr) et des valeurs atténuées des composantes de luminance (L), de façon à former une image de qualité améliorée pour les moyens d'affichage ou pour les moyens d'impression de l'appareil dans lequel est incorporé le système (1) de traitement d'image. En variante, l'utilisation de ces nouvelles valeurs permet de générer un fichier image modifiée (6) dont les données sont soit mémorisées, soit affichées, soit imprimées. L'annexe jointe présente un exemple de réalisation de programme implémentant le processus permettant d'obtenir les valeurs de remplacement pour les composantes de chrominance (Cb, Cr).

Les modules et étapes décrits précédemment peuvent être réalisés dans un composant électronique masqué ou programmé. Le masque ou le programme implémentant les étapes du procédé peut être de la forme décrite ci-après en annexe.

Un des avantages de l'invention est de diminuer efficacement l'effet de la surexposition au flash lors d'une prise de vue en diminuant de manière localisée la blancheur de la partie surexposée tout en y ajoutant de la couleur de manière pertinente.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## ANNEXE

Exemple d'implémentation pour modifier les valeurs de coefficient de chrominance du pixel surexposé avec 4 orientations de recherche

```
Int seuil fixé = 200          # détermination du seuil
Void flash(Cimage &img)
{
int                    i, j, iGoodColorRight, jGoodColorDown;
unsigned char goodCrLeft, goodCbLeft;
# étape (54) de détection suivant les orientations : haut, gauche, bas, droite
unsigned char upLigne = new unsigned char[img.getWidth()];
unsigned char tabb[5], tabr[5];

for (i = 0; i<img.getWidth(); ++i)
{
        upLigne[i] = 0;                            # obtention du pixel haut
}                                                  non surexposé

for j = 0; j<img.getHeight(); ++j)
{
        goodCbLeft = img.getCbPixel(0, j);         # obtention du pixel gauche
        goodCrLeft = img.getCrPixel(0,,j);         non surexposé
        igoodColorRight = 0;
        for (i=0; i< img.getWidth(); ++i)
                if (img.getYPixel(i,j) > YMAX)      # condition des pixels surexposés
                {
                        jGoodColorDown = j;
                        if (iGoodColorRight < i)
                        {
                                iGoodColorRight = i;
                                while ((iGoodColorRight < img.getWidth())
                                        && img.getYPixel(iGoodColorRight,j) > YMAX))
                                                iGoodColorRight++;
                        }
                        while ((jGoodColorDown < img.getHeight())
                                && img.getYPixel(i,jGoodColorDown) > YMAX))
                                        jGoodColorDown++;

                        tabb[0] = img.getCbPixel(i,j);              # pixel surexposé
                        tabb[1] = goodCbLeft;                       # pixel gauche
                        tabb[2] = img.getCbPixel(iGoodColorRight,j);  # pixel droit
                        tabb[3] = img.getCbPixel(i, upLigne[i]);    # pixel haut
                        tabb[4] = img.getCbPixel(i, jGoodColorDown);  # pixel bas
                        img.getCbPixel(i,,j) = moyenne(tabb, 5);

                        tabr[0] = img.getCrPixel(i,j);              # pixel surexposé
                        tabr[1] = goodCrLeft;                       # pixel gauche
                        tabr[2] = img.getCrPixel(iGoodColorRight,j);  # pixel droit
                        tabr[3] = img.getCrPixel(i, upLigne[i]);    # pixel haut
                        tabr[4] = img.getCrPixel(i, jGoodColorDown);  # pixel bas
                        img.getCrPixel(i,,j) = moyenne(tabr, 5);
}
```

# recherche vers la droite

# recherche vers le bas

```
# si le pixel n'est pas surexposé
            else
            {
                    goodCbLeft = img.getCbPixel(i, j);
                    goodCrLeft = img.getCrPixel(i, j);
                    upLine[i] = j;
            }
        }
        delete upLine;
}

# étape (55) de comparaison

unsigned char moyenne(unsigned char *tab, unsigned char num)
{
int result;
int max = 0;
int min = 255;
int i;

result = 0;
for (i=0; i<num; i++)
{
        result += tab[i];
        if (tab [i] < min)
        {
                min = tab[i];
        }
        if (tab [i] > max)
        {
                max = tab[i];
        }
}
# étape (56) de discrimination
result -= max;
result -= min;
# calcul de la valeur moyenne de remplacement
return result/(num - 2)
```

**Revendications**

1. Procédé destiné à diminuer la surexposition du flash pour améliorer la qualité d'images numériques composées chacune d'une série de pixels, mis en oeuvre par un système (1) de traitement d'image incorporé dans un appareil doté soit de moyens d'affichage de l'image soit de moyens d'impression, ledit système (1) comprenant un module (10) générateur de matrice de pixels et une unité de mémorisation (11), ledit procédé comportant une étape (52) de stockage dans l'unité de mémorisation (11) d'une matrice de pixels (M) produite par le module (10) générateur de matrice à partir d'une image captée .(5) ainsi que des données (L, Cb, Cr) dites de couleur représentatives pour chacun des pixels de la matrice d'une composante de luminance (L) et d'une composante de chrominance représentée par au moins deux coefficients (Cb, Cr), **caractérisé en ce qu'**il comporte :

- une étape (53) de sélection dans la matrice de pixels (M), réalisée par des moyens de sélection (12) du système (1) de traitement d'image, de pixels dits surexposés (S) ayant la valeur de leur composante de luminance (L) supérieure à un seuil fixé (3) qui est paramétré dans le système (1) ;
- pour chaque pixel surexposé (S), une étape (54) de détection dans la matrice de pixels (M), par des moyens de détection (13) du système (1) de traitement d'image, suivant au moins deux orientations (30) distinctes prises à partir du pixel surexposé (S) pour détecter selon chacune des orientations (30) le pixel non surexposé (300) le plus proche,
- une étape d'atténuation (58) réalisée par la suite par des moyens de transformation (15) de données dudit système (1) pour abaisser la valeur de la composante de luminance (L) des pixels surexposés (S), par utilisation d'un coefficient d'atténuation K strictement inférieur à 1 ;
- une étape (57) de remplacement des deux coefficients de chrominance (Cb, Cr) de chacun des pixels surexposés (S) pour ajouter de la couleur, le calcul de valeurs de remplacement des composantes de chrominance (Cb, Cr) utilisant les valeurs de coefficients de chrominance (Cb, Cr) d'au moins un pixel non surexposé (300) détecté comme étant le plus proche dudit pixel surexposé (S) ;
- une étape (59) d'utilisation des valeurs de remplacement des composantes de chrominance (Cb, Cr) et des valeurs atténuées des composantes de luminance (L) de façon à former une image de qualité améliorée sur les moyens d'affichage ou par les moyens d'impression.

2. Procédé selon la revendication 1, **caractérisé en ce qu'**il comporte après l'étape (54) de détection, pour chacun des deux coefficients de chrominance (Cb, Cr), une étape (55) de comparaison par un module de calcul (14) des valeurs du coefficient de chrominance (Cb, Cr) pour le pixel surexposé (S) ainsi que pour les pixels détectés (300), suivie d'une étape (56) de discrimination de pixels consistant à discriminer parmi les pixels comparés (S, 300) ceux qui ont la valeur de coefficient de chrominance (Cb, Cr) la plus élevée, respectivement ayant la valeur de coefficient de chrominance (Cb, Cr) la plus faible.

3. Procédé selon la revendication 2, dans lequel l'étape (57) de remplacement est réalisée, pour chacun des deux coefficients de chrominance (Cb, Cr) du pixel surexposé (S), en remplaçant la valeur du coefficient de chrominance (Cb, Cr) dudit pixel surexposé (S) par la moyenne des valeurs de coefficient des pixels non surexposés détectés et non discriminés, ce remplacement étant réalisé par lesdits moyens de transformation (15) de données.

4. Procédé selon la revendication 1 ou 2, dans lequel les orientations distinctes (30) de détection sont choisies parmi les orientations suivantes autour d'un pixel surexposé (S) :

- orientations à gauche et à droite suivant des lignes horizontales de la matrice de pixels (M) ;
- orientations en haut et en bas suivant des colonnes verticales de la matrice de pixels (M) ;
- selon les diagonales de la matrice de pixels (M), orientations en bas et à gauche, en haut et à gauche, en haut et à droite, en bas et à droite.

5. Procédé selon l'une quelconque des revendications 1 à 4, dans lequel l'étape (58) d'atténuation consiste à abaisser l'excès de la valeur de la composante de luminance (L) d'un pixel surexposé (S) par rapport au seuil fixé (3) selon un programme ou un circuit mettant en oeuvre l'équation suivante :

$$Y - Yseuil = (y - Yseuil)^* K$$

où Y désigne la luminance atténuée du pixel surexposé (S), y désigne la luminance non atténuée, Yseuil désigne le seuil fixé (3) et K désigne un coefficient d'atténuation strictement inférieur à 1.

6. Procédé selon l'une des revendications 1 à 5, dans lequel les deux coefficients de chrominance (Cb, Cr) représentent la chrominance bleu et la chrominance rouge.

7. Procédé selon l'une quelconque des revendications 1 à 6, dans lequel l'étape (53) de sélection des pixels surexposés (S) est réalisée ligne par ligne en parcourant tous les pixels de la matrice de pixels (M), des données de position (42) des pixels non surexposés étant sauvegardées dans l'unité de mémorisation (11) et utilisées pour une étape (54) de détection des pixels non surexposés (300) les plus proches.

8. Procédé selon l'une quelconque des revendications 1 à 6, dans lequel l'étape (53) de sélection des pixels surexposés (S) est réalisée cotonne par colonne en parcourant tous les pixels de la matrice de pixels, des données de position (20) des pixels non surexposés étant sauvegardées dans l'unité de mémorisation (11) et utilisées pour une étape (54) de détection des pixels non surexposés (300) les plus proches.

9. Procédé selon la revendication 7, dans lequel les données de position (42) des pixels non surexposés sont représentatives de lignes de sauvegarde (22) correspondant chacune à une ligne déterminée de la matrice de pixels et reportent d'une part le numéro de colonne (21) du premier pixel de la ligne déterminée non surexposé vers la gauche et d'autre part les numéros de ligne (220) de chacun des pixels non surexposés situés vers le haut de cette ligne déterminée.

10. Procédé selon l'une quelconque des revendications 1 à 9, dans lequel, pour une dynamique de luminance comprise entre 0 et 255, le seuil fixé (3) est compris entre 185 et 220.

11. Procédé selon l'une quelconque des revendications 5 à 10, dans lequel le coefficient d'atténuation est compris entre 0,6 et 0,95.

12. Système (1) de traitement d'image destiné à diminuer la surexposition du flash pour améliorer la qualité d'images numériques composées chacune d'une série de pixels, comprenant un module (10) générateur de matrice de pixels pour produire une matrice de pixels (M) à partir d'une image captée (5) et une unité de mémorisation (11) apte à stocker des données (41) représentatives d'une matrice de pixels (M) produite par le module (10) générateur de matrice ainsi que des données (L, Cb, Cr) dites de couleur représentatives pour chacun des pixels de la matrice (M) d'une composante de luminance (L) et d'une composante de chrominance représentée par au moins deux coefficients (Cb, Cr), **caractérisé en ce qu'**il comporte :

   - des moyens de sélection (12) aptes à utiliser un seuil fixé (3) pour la composante de luminance (L) qui est paramétré dans l'unité de mémorisation (11) pour sélectionner dans la matrice de pixels (M) des pixels dits surexposés (S) ayant la valeur de leur composante de luminance (L) supérieure à ce seuil fixé (3) :
   - des moyens de détection (13) aptes à détecter pour chaque pixel surexposé (S), suivant au moins deux orientations distinctes (30) prises à partir du pixel surexposé (S), le pixel non surexposé (300) le plus proche selon chacune des orientations (30) ;
   - un module de calcul (14) permettant, pour chaque pixel surexposé (S), de comparer d'une part pour le pixel surexposé (S) et les pixels détectés (300) les valeurs respectives attribuées pour chacun des deux coefficients de chrominance (Cb, Cr), et de discriminer d'autre part parmi les pixels comparés (S, 300) ceux qui ont la valeur de coefficient de chrominance (Cb, Cr) la plus élevée, respectivement ayant la valeur de coefficient de chrominance (Cb, Cr) la plus faible ;
   - des moyens de transformation (15) de données agencés pour transformer des données (L, Cb, Cr) de couleur correspondant aux pixels surexposés (S), par abaissement de la valeur de la composante de luminance (L) en utilisant un coefficient d'atténuation K strictement inférieur à 1, et remplacement de la valeur de chacun des deux coefficients de chrominance (Cb, Cr) par une moyenne respective des valeurs de coefficient des pixels non discriminés calculée par le module de calcul (14) pour chaque pixel surexposé (S) ;
   - une unité (16) d'utilisation des valeurs de remplacement des composantes de chrominance (Cb, Cr) et les valeurs abaissées des composantes de luminance (L) pour modifier la qualité de l'image affichée ou imprimée par un dispositif d'affichage ou respectivement d'impression connecté au système (1) de traitement d'image.

13. Système (1) selon la revendication 12, dans lequel les moyens de détection (13) sont agencés pour parcourir la matrice de pixels (M) à partir d'un pixel surexposé (S) selon des orientations distinctes (30) choisies parmi les orientations suivantes :

   - orientations à gauche et à droite dudit pixel surexposé (S) suivant des lignes horizontales de la matrice de pixels (M) ;
   - orientations en haut et en bas dudit pixel surexposé (S) suivant des colonnes verticales de la matrice de pixels (M),

- selon les diagonales de la matrice de pixels (M), orientations en bas et à gauche, en haut et à gauche, en haut et à droite, en bas et à droite.

**14.** Système (1) selon la revendication 12 ou 13, dans lequel dans lequel les deux coefficients de chrominance (Cb, Cr) représentent la chrominance bleu et la chrominance rouge.

**15.** Système (1) selon l'une quelconque des revendications 12 à 14, dans lequel lesdites données (L, Cb, Cr) de couleur correspondant à chaque pixel de la matrice de pixels (M) sont mémorisées sous forme de tables (4) dans l'unité de mémorisation (11), chacune des tables (4) incluant des données (42) représentatives de coordonnées du pixel dans la matrice (M).

**16.** Système (1) selon la revendication 15, dans lequel les moyens de sélection (12) sont agencés pour sélectionner les pixels surexposés (S) ligne par ligne en parcourant tous les pixels de la matrice de pixels (M) et pour déclencher la sauvegarde dans l'unité de mémorisation (11) de données représentatives des tables (4) correspondant aux pixels non surexposés, les moyens de détection (13) étant aptes à utiliser ces données sauvegardées pour détecter les pixels non surexposés (300) les plus proches d'un pixel surexposé (S).

**17.** Système (1) selon la revendication 15, dans lequel les moyens de sélection (12) sont agencés pour sélectionner les pixels surexposés (S) colonne par colonne en parcourant tous les pixels de la matrice de pixels (M) et pour déclencher la sauvegarde dans l'unité de mémorisation (11) de données représentatives des tables (4) correspondant aux pixels non surexposés, les moyens de détection (13) étant aptes à utiliser ces données sauvegardées pour détecter les pixels non surexposés (300) les plus proches d'un pixel surexposé (S).

**18.** Système (1) selon l'une quelconque des revendications 12 à 17, dans lequel les moyens de sélection (12) sont agencés pour sauvegarder des données (20) de position des pixels non surexposés, ces données (20) étant représentatives de lignes de sauvegarde (22) correspondant chacune à une ligne déterminée de la matrice de pixels (M) et reportant d'un part le numéro de colonne (21) du premier pixel de la ligne déterminée non surexposé vers la gauche et d'autre part les numéros de ligne (220) de chacun des pixels non surexposés situés vers le haut à proximité de cette ligne déterminée.

**19.** Système (1) selon l'une quelconque des revendications 12 à 18, dans lequel les moyens de transformation (15) de données sont aptes à utiliser un coefficient d'atténuation strictement inférieur à 1 paramétré et stocké dans l'unité de mémorisation (11) afin d'abaisser la valeur de la composante de luminance (L) selon un programme ou un circuit mettant en oeuvre l'équation suivante :

$$Y = Yseuil + (y - Yseuil)^* K$$

où Y désigne la luminance atténuée du pixel surexposé (S), y désigne la luminance non atténuée, Yseuil désigne le seuil fixé (3) et K désigne le coefficient d'atténuation strictement inférieur à 1.

**20.** Système (1) selon la revendication 19, dans lequel le seuil fixé (3) pour la composante de luminance (L) est compris entre 185 et 220 pour une dynamique comprise entre 0 et 255 et le coefficient d'atténuation est compris entre 0,6 et 0,95.

**Claims**

**1.** Method intended to decrease the overexposure of the flash in order to improve the quality of digital images each composed of a series of pixels, implemented by an image processing system, (1) incorporated into a device provided either with image display means or with prinking means, the said system (1) comprising a pixel matrix generator module (10) and a memory unit (11), the said method including a step (52) of storing in the memory unit (11) a pixel matrix (M) produced by the matrix generator module (10) from a captured image (5) as well as so-called colour dada (L, Cb, Cr) representing for each of the pixels of the matrix a luminance component (L) and a chrominance component represented by at least two coefficients (Cb, Cr), **characterised in that** it includes:

- a step (53) of selection in the pixel matrix (M), produced by selection means (12) of the image processing system (1), or so-called overexposed pixels (S) in which the value of their luminance component (L) is greater than a fixed threshold (3) which is parameterised in the system (1);

- for each overexposed pixel (S), a step (54) of detection in the pixel matrix (M), by detection means (13) of the image processing system (1), according to at least two distinct orientations (30) taken from the overexposed pixel (S) in order to detect in each of the orientations (30) the closest pixel which is not overexposed (300);

- a step of attenuation (58) carried out afterwards by means for transformation (15) of data of the said system (1) in order to decrease the value of the luminance component (L) of the overexposed pixels (S), by use of an attenuation coefficient K strictly less than 1;

- a step (57) of replacement of the two chrominance coefficients (Cb, Cr) of each of the overexposed pixels (S) in order to add colour, the calculation of replacement values of the chrominance components (Cb, Cr) using the values of chrominance coefficients (Cb, Cr) of at least one pixel which is not overexposed (300) detected as being the closest to the said overexposed pixel (S);

- a step (59) of use of the replacement values of the chrominance components (Cb, Cr) and the attenuated values of the luminance components (L) in such a way as to form an image of improved quality on the display means or by the printing means.

2. Method as claimed in Claim 1, **characterised in that** it includes after the detection step (54), for each of the two chrominance coefficient (Cb, Cr), a step (55) of comparison by a calculation module (14) of the values of the chrominance coefficient (Cb, Cr) for the overexposed pixel (S) and also for the detected pixels (300), followed by a step (56) of discrimination of pixels consisting of discriminating amongst the compared pixels (S, 300) those which have the highest value of the chrominance coefficient (Cb, Cr) and those having the lowest value of the chrominance coefficient (Cb, Cr).

3. Method as claimed in Claim 2, wherein the replacement step (57) is carried out, for each of the chrominance coefficients (Cb, Cr) of the overexposed pixel (S), by replacing the value of the chrominance coefficient (Cb, Cr) of the said overexposed pixel (S) by the mean of the coefficient values of the non-overexposed pixels which are detected and not discriminated, this replacement being carried out by the said data transformation means (15).

4. Method as claimed in Claim 1 or Claim 2, wherein the distinct orientations (30) for detection are chosen from amongst the following orientations around an overexposed pixel (S):

   - orientations to left and to right along horizontal lines of the pixel matrix (M);
   - orientations up and down in vertical columns of the pixel matrix (M);
   - along diagonals of the pixel matrix (M), orientations down and to the left, up and to the left, up and to the right, down and to the right.

5. Method as claimed in any one of Claims 1 to 4, wherein the attenuation step (58) consists of decreasing the excess of the value of the luminance component (L) of an overexposed pixel (S) relative to the fixed threshold (3) according to a program or a circuit implementing the following equation:

$$Y - Yseuil = y - Yseuil)*K$$

where Y designates the attenuated luminance of the overexposed pixel (S), y designates the unattenuated luminance, Y seuil designates the fixed threshold (3) and K designates an attenuation coefficient strictly lower than 1.

6. Method as claimed in any one of Claims 1 to 5, wherein the two chrominance coefficients (Cb, Cr) represent the blue chrominance and the red chrominance.

7. Method as claimed in any one of Claims 1 to 6, wherein the step (53) of selection of the overexposed pixels (S) is carried out line by line, passing through all the pixels of the pixel matrix (M), position data (42) of the pixels which are not overexposed being saved in the memory unit (11) and used for a step (54) of detection of the closest pixels which are not overexposed (300).

8. Method as claimed in any one of Claims 1 to 6, wherein the step (53) of selection of the overexposed pixels (S) is carried out column by column, passing through wall the pixels of the pixel matrix (M), position data (20) of the pixels which are not overexposed being saved in the memory unit (11) and used for a step (54) of detection of the closest pixels which are not overexposed (300).

9. Method as claimed in Claim 7, wherein the position data (42) of the pixels which are not overexposed represent backup lines (22) each corresponding to a specific line of the pixel matrix and transfer, on the one hand, the column number (21) or the first non-overexposed pixel of the specific line to the left and, on the other hand, the line numbers (220) of each of the non-overexposed pixels situated towards the top of this specific line.

10. Method as claimed in any one of Claims 1 to 9, wherein for a luminance dynamic between 0 and 255 the fixed threshold (3) is between 185 and 220.

11. Method as claimed in any one of Claims 5 to 10, wherein the attenuation coefficient is between 0.6 and 0.95.

12. Image processing system (1) intended to decrease the overexposure of the flash in order to improve the quality of digital images each composed of a series of pixels, comprising a pixel matrix generator module (10) in order to product a pixel matrix (M) from a captured image (5) and a memory unit (11) capable of storing data representing a pixel matrix (M) produced by the matrix generator module (10) as well as so-called colour data (L, Cb, Cr) representing for each of the pixels of the matrix a luminance component (L) and a chrominance component represented by at least two coefficients (Cb, Cr), **characterised in that** it includes:

    - selection means (12) capable of using a fixed threshold (3) for the luminance component (L) which is parameterised in the memory unit (11) in order to select in the pixel matrix (M) so-called overexposed pixels (S) in which the value of their luminance component (L) is greater than this fixed threshold (3);
    - detection means (13) capable of detecting for each overexposed pixel (S), according to at least two distinct orientations (30) taken from the overexposed pixel (S), the closest pixel which is not overexposed (300) in each of the orientations (30);
    - a calculation module (14) making it possible, for each overexposed pixel (S), on the one hand to compare for the overexposed pixel (S) and the detected pixels (300) the respective values assigned to each of the two chrominance coefficients (Cb, Cr), and on the other hand discriminating amongst the compared pixels (S, 300) those which have the highest value of the chrominance coefficient (Cb, Cr) and those having the lowest value of the chrominance coefficient (Cb, Cr);
    - data transformation means (15) provided for transforming colour data (L, Cb, Cr) corresponding to the overexposed pixels (S) by decreasing the value of the luminance component (L) using an attenuation coefficient K strictly lower than 1, and replacing the value of each of the two chrominance coefficients (Cb, Cr) by a respective mean of the coefficient values of the non-discriminated pixels calculated by the calculation module (14) for each overexposed pixel (S);
    - a unit (16) for using the replacement values of the chrominance coefficients (Cb, Cr) and the decreased values of the luminance components (L) in order to modify the quality of the image displayed or printed by a respective display device or pointer connected to the image processing system (1).

13. System (1) as claimed in Claim 12, wherein the detection means (13) are provided in order to pass through the pixel matrix (M) from an overexposed pixel (S) according to distinct orientations (30) chosen from amongst the following orientations:

    - orientations to left and to right of the said overexposed pixel (S) along horizontal lines of the pixel matrix (M);
    - orientations up and down from the said overexposed pixel (S) in vertical columns of the pixel matrix (M);
    - along diagonals of the pixel matrix (M), orientations down and to the left, up and to the left, up and to the right, down and to the right.

14. System (1) as claimed in Claim 12 or Claim 13, wherein the two chrominance coefficients (Cb, Cr) represent the blue chrominance and the red chrominance.

15. System (1) as claimed in any one of Claims 12 to 14, wherein the said colour data (L, Cb, Cr) corresponding to each pixel of the pixel matrix (M) are memorised in the form of tables (4) in the memory unit (11), each of the tables (4) including data (42) representing coordinates of the pixel in the matrix (M).

16. System (1) as claimed in Claim 15, wherein the selection means (12) are provided in order to select the overexposed pixels (S) line by line, passing through all the pixels of the pixel matrix (M), and in order to initiate the slaving in the memory unit (11) of data representing tables (4) corresponding to the non-overexposed pixels, the detection means (13) being capable of using these saved data in order to detect the non-overexposed pixels (300) which are closest to an overexposed pixel (S).

17. System (1) as claimed in Claim 15, wherein the selection means (17) are provided in order to select the overexposed pixels (S) line by line, passing through all the pixels of the pixel matrix (M), and in order to initiate th saving in the memory unit (11) of data representing tables (4) corresponding to the non-overexposed pixels, the detection means (13) being capable of using these saved data in order to detect the non-overexposed pixels (300) which are closest to an overexposed pixel (S).

18. System (1) as claimed in any one of Claims 12 to 17, wherein the selection means (12) are provided in order to save the position data (20) of the pixels which are not overexposed, these data (20) representing backup lines (22) each corresponding to a specific line of the pixel matrix (M) and transferring, on the one hand, the column number (21) of the first non-overexposed pixel of the specific line to the left and, on the other hand, the line numbers (220) of each of the non-overexposed pixels situated towards the top close to this specific line.

19. System (1) as claimed in any one of Claims 12 to 18, wherein the data transformation means (15) are capable of using an attenuation coefficient strictly lower than 1 parameterised and stored in the memory unit (11) in order to decrease the value of the luminance component (L) according to a program or a circuit implementing the following equation:

$$Y - Yseuil = y - Yseuil)*K$$

where Y designates the attenuated luminance of the overexposed pixel (S), y designates the unattenuated luminance, Yseuil designates the fixed threshold (3) and K designates the attenuation coefficient strictly lower than 1.

20. System (1) as claimed in Claim 19, wherein the fixed threshold (3) for the luminance component (L) is between 185 and 220 for a dynamic between 0 and 255 and the attenuation coefficient is between 0.6 and 0.95.

**Patentansprüche**

1. Verfahren, das zum Verringern der Blitzüberbelichtung zum Verbessern der Qualität von jeweils aus einer Reihe von Bildpunkten gebildeten digitalen Bildern bestimmt ist, das von einem Bildverarbeitungssystem (1) durchgeführt wird, das in eine Vorrichtung integriert ist, die entweder mit Mitteln zum Anzeigen des Bildes oder mit Mitteln zum Drucken ausgestattet ist, wobei das System (1) ein Bildpunktmatrix-Erzeugungsmodul (10) und eine Speichereinheit (11) aufweist, wobei das Verfahren aufweist: einen Schritt (52) des Speicherns in der Speichereinheit (11) einer von dem Matrixerzeugungsmodul (10) ausgehend von einem erfassten Bild (5) erzeugten Pixelmatrix (M) sowie von als Farbdaten bezeichneten Daten (L, Cb, Cr), die für jeden der Bildpunkte der Matrix für eine Luminanzkomponente (L) und für eine durch mindestens zwei Koeffizienten (Cb, Cr) dargestellte Chrominanzkomponente repräsentativ sind, **dadurch gekennzeichnet, dass** es aufweist:

- einen von Auswählmitteln (12) des Bildverarbeitungssystems (1) durchgeführten Schritt (53) des Auswählens von Bildpunkten in der Bildpunktmatrix (M), die als überbelichtet (S) bezeichnet werden, deren Wert ihrer Luminanzkomponente (L) größer als eine festgesetzte, in dem System (1) parametrisierte Schwelle (3) ist,
- für jeden überbelichteten Bildpunkt (S) einen Schritt des Detektierens (54) in der Bildpunktmatrix (M) mittels Detektionsmitteln (13) des Bildverarbeitungssystems (1) entlang mindestens zwei unterschiedlichen Ausrichtungen (30) ausgehend von dem überbelichteten Bildpunkt (S) zum Detektieren des nächsten nicht überbelichteten Bildpunktes (300) gemäß jeder der Ausrichtungen (30),
- einen anschließend von Datenumwandlungsmitteln (15) des Systems (1) durchgeführten Dämpfungsschritt (58) zum Herabsetzen des Wertes der Luminanzkomponente (L) der überbelichteten Bildpukte (S) mittels eines Dämpfungskoeffizienten K, der deutlich kleiner als 1 ist,
- einen Schritt (57) des Austauschens der beiden Chrominanzkoeffizienten (Cb, Cr) von jedem der überbelichteten Bildpunkte (S) zum Hinzufügen von Farbe, wobei die Berechnung von Austaüschwerten der Chrominanzkomponenten (Cb, Cr) die Werte von Chrominanzkoeffizienten (Cb, Cr) von mindestens einem nicht überbelichteten Bildpunkt (300) verwendet, der als am nächsten zu dem überbelichteten Bildpunkt (S) detektiert wurde, und

- einen Schritt (59) des Verwendens der Austauschwerte der Chrominanzkomponenten (Cb, Cr) und der gedämpften Werte der Luminanzkomponenten (L), so dass auf den Anzeigemitteln oder von den Druckmitteln ein Bild mit verbesserter Qualität gebildet wird.

2. Verfahren gemäß Anspruch 1, **dadurch gekennzeichnet, dass** es nach dem Schritt (54) des Detektierens für jeden der beiden Chrominanzkoeffizienten (Cb, Cr) aufweist: einen Schritt (55) des Vergleichens der Werte des Chrominanzkoeffizienten (Cb, Cr) für den überbelichteten Bildpunkt (S) sowie für die detektierten Bildpunkte (300) mittels eines Berechnungsmoduls (14), gefolgt von einem Schritt (56) des Diskriminierens von Bildpunkten, bestehend aus dem Diskriminieren unter den verglichenen Bildpunkten (S, 300) derjenigen, die den höchsten Chrominanzkoeffizientenwert (Cb, Cr) aufweisen, beziehungsweise derjenigen, die den niedrigsten Chrominanzkoeffizientenwert (Cb, Cr) aufweisen.

3. Verfahren gemäß Anspruch 2, wobei der Austauschschritt (57) für jeden der beiden Chrominanzkoeffizienten (Cb, Cr) des überbelichteten Bildpunktes (S) durch Austauschen des Wortes des Chrominanzkoeffizienten (Cb, Cr) des überbelichteten Bildpunktes (S) gegen den Mittelwert der Koeffizientenwerte der detektierten und nicht diskriminierten nicht überbelichteten Bildpunkte erfolgt, wobei das Austauschen mittels der Datenumwandlungsmittel (15) erfolgt.

4. Verfahren gemäß Anspruch 1 oder 2, wobei die verschiedenen Detektionsausrichtungen (30) aus den folgenden Ausrichtungen um einen überbelichteten Bildpunkt (S) herum ausgewählt werden:

   - Ausrichtungen links und rechts entlang horizontalen Zeilen der Bildpunktmatrix (M),
   - Ausrichtungen oben und unten entlang vertikalen Spalten der Bildpunktmatrix (M),
   - entlang den Diagonalen der Bildpunktmatrix (M) Ausrichtungen unten und links, oben und links, oben und rechts, unten und rechts.

5. Verfahren gemäß einem der Ansprüche 1 bis 4, wobei der Dämpfungsschritt (58) aus dem Herabsetzen des Überschusses des Wertes der Luminanzkomponente (L) eines überbelichteten Bildpunktes (S) relativ zu der festgesetzten Schwelle (3) gemäß einem Programm oder einem Schaltkreis unter Anwendung der folgenden Gleichung besteht:

$$Y - Y_{Schwelle} = (y - Y_{Schwelle}) * K$$

wobei Y die gedämpfte Luminanz des überbelichteten Bildpunktes (S) bezeichnet, y die nicht gedämpfte Luminanz bezeichnet, Y Schwelle die festgesetzte Schwelle (3) bezeichnet und K seinen Dämpfungskoeffizienten bezeichnet, der deutlich kleiner als 1 ist.

6. Verfahren gemäß einem der Ansprüche 1 bis 5, wobei die beiden Chrominanzkoeffizienten (Cb, Cr) die blaue Chrominanz und die rote Chrominanz repräsentieren.

7. Verfahren gemäß einem der Ansprüche 1 bis 6, wobei der Schritt (53) des Auswählens der überbelichteten Bildpunkte (S) Zeile für Zeile erfolgt, wobei alle Bildpunkte der Bildpunktmatrix (M) durchlaufen werden, wobei Positionsdaten (42) der nicht überbelichteten Bildpunkte in der Speichereinheit (11) gespeichert und für einen Schritt (54) des Detektierens der nächsten nicht überbelichteten Bildpunkte (300) verwendet werden.

8. Verfahren gemäß einem der Ansprüche 1 bis 6, wobei der Schritt (53) des Auswählens der überbelichteten Bildpunkte (S) Spalte für Spalte erfolgt, wobei alle Bildpunkte der Bildpunktmatrix (M) durchlaufen werden, wobei Positionsdaten (20) der nicht überbelichteten Bildpunkte in der Speichereinheit (11) gespeichert und für einen Schritt (54) des Detektierens der nächsten nicht überbelichteten Bildpunkte (300) verwendet werden.

9. Verfahren gemäß Anspruch 7, wobei die Positionsdaten (42) der nicht überbelichteten Bildpunkte für jeweils einer bestimmten Zeile der Bildpunktmatrix entsprechende Speicherzeilen (22) repräsentativ sind und auf der einen Seite die Spaltennummer (21) des ersten nicht überbelichteten Bildpunktes der bestimmten Zeile in Richtung nach links und auf der andere Seite die Zeilennummern (220) von jedem der nicht überbelichteten positionierten Bildpunkte von der bestimmten Zeile in Richtung nach oben übertragen.

10. Verfahren gemäß einem der Ansprüche 1 bis 9, wobei die festgelegte Schwelle (3) für eine Luminanzdynamik zwischen 0 und 255 zwischen 185 und 220 liegt.

11. Verfahren gemäß einem der Ansprüche 5 bis 10, wobei der Dämpfungskoeffizient zwischen 0,6 und 0,95 liegt.

12. Bildverarbeitungssystem (1), das zum Verringern der Blitzüberbelichtung zum Verbessern der Qualität von jeweils aus einer Reihe von Bildpunkten bestehenden digitalen Bildern bestimmt ist, aufweisend ein Bildpunktmatrix-Erzeugungsmodul (10) zum Erzeugen einer Bildpunktmatrix (M) ausgehend von einem erfassten Bild (5) und eine Speichereinheit (11), die zum Speichern von Daten (41), die für eine von dem Bildpunktmatrix-Erzeugungsmodul (10) erzeugte Bildpunktmatrix (M) repräsentativ sind, sowie von als Farbdaten bezeichneten Daten (L, Cb, Cr) geeignet ist, die für jeden der Bildpunkte der Matrix für eine Luminanzkomponente (L) und für eine durch mindestens zwei Koeffizienten (Cb, Cr) dargestellte Chrominanzkomponente repräsentativ sind, **dadurch gekennzeichnet, dass** es aufweist:

- Auswählmittel (12), die zum Verwenden einer festgesetzten Schwelle (3) für die Luminanzkomponente (L) geeignet sind, die in der Speichereinheit (11) parametrisiert ist, zum Auswählen der Bildpunkte in der Bildpunktmatrix (M), die als überbelichtet (S) bezeichnet werden, deren Wert ihrer Luminanzkomponente (L) größer als die festgesetzte Schwelle (3) ist,
- Detektionsmittel (13), die zum Detektieren für jeden überbelichteten Bildpunkt (S) entlang mindestens zwei verschiedenen Ausrichtungen (30) ausgehend von dem überbelichteten Bildpunkt (S) des gemäß jeder der Ausrichtungen (30) am nächsten liegenden nicht überbelichteten Bildpunktes (300) geeignet sind,
- ein Rechenmodul (14), das für jeden überbelichteten Bildpunkt (S) einerseits das Vergleichen für den überbelichteten Bildpunkt (S) und die detektierten Bildpunkte (300) der jeweiligen für jeden der beiden Chrominanzkoeffizienten (Cb, Cr) zugeordneten Werte und andererseits das Diskriminieren aus den verglichenen Bildpunkten (S, 300) derjenigen, die den höchsten Chrominanzkoeffizientenwert (Cb, Cr) aufweisen, beziehungsweise derjenigen, die den niedrigsten Chrominanzkoeffizientenwert (Cb, Cr) aufweisen, ermöglicht,
- Mittel zum Umwandeln (15) von Daten, die zum Umwandeln der Farbdaten (L, Cb, Cr), die den überbelichteten Bildpunkten (S) entsprechen, geeignet sind, durch Herabsetzen des Wertes der Luminanzkomponente (L) mittels eines Dämpfungskoeffizienten K, der deutlich kleiner als 1 ist, und durch Austauschen des Wertes jedes der beiden Chrominanzkoeffizienten (Cb, Cr) gegen einen jeweiligen Mittelwert der Koeffizientenwerte der nicht diskriminieren Bildpunkte, der von dem Rechenmodul (14) für jeden überbelichteten Bildpunkt (S) berechnet wird,
- eine Einheit (16) zum Verwenden der Austauschwerte der Chrominanzkomponenten (Cb, Cr) und der herabgesetzten Werte der Luminanzkomponenten (L) zum Verändern der Qualität des von einer mit dem Bildverarbeitungssystem (1) verbundenen Anzeigevorrichtung beziehungsweise Druckvorrichtung angezeigten oder gedruckten Bildes.

13. System (1) gemäß Anspruch 12, wobei die Detektionsmittel (13) zum Durchlaufen der Bildpunktmatrix (M) ausgehend von einem überbelichteten Bildpunkt (S) entlang verschiedener aus den folgenden Ausrichtungen ausgewählter Ausrichtungen (30) eingerichtet sind:

- Ausrichtungen links und rechts von dem überbelichteten Bildpunkt (S) entlang horizontalen Zeilen der Bildpunktmatrix (M),
- Ausrichtungen oben und unten von dem überbelichteten Bildpunkt (S) entlang vertikalen Spalten der Bildpunktmatrix (M),
- entlang den Diagonalen der Bildpunktmatrix (M) Ausrichtungen unten und links, oben und links, oben und rechts, und unten und rechts.

14. System (1) gemäß Anspruch 12 oder 13, wobei die beiden Chrominanzkoeffizienten (Cb, Cr) die blaue Chrominanz und die rote Chrominanz repräsentieren.

15. System (1) gemäß einem der Ansprüche 12 bis 14, wobei die Farbdaten (L, Cb, Cr), die jedem Bildpunkt der Bildpunktmatrix (M) entsprechen, in Form von Tabellen (4) in der Speichereinheit (11) gespeichert sind, wobei jede der Tabellen (4) Daten (42) enthält, die für Koordinaten des Bildpunktes in der Matrix (M) repräsentativ sind.

16. System (1) gemäß Anspruch 15, wobei die Auswählmittel (12) eingerichtet sind zum Auswählen der überbelichteten Bildpunkte (S) Zeile für Zeile, wobei alle Bildpunkte der Bildpunktmatrix (M) durchlaufen werden, und zum Auslösen des Speicherns in der Speichereinheit (11) von Daten, die für die Tabellen (4) repräsentativ sind, die den nicht überbelichteten Bildpunkten entsprechen, wobei die Detektionsmittel (13) zum Verwenden der gespeicherten Daten zum Detektieren der nicht überbelichteten Bildpunkte (300), die am nächsten bei einem überbelichteten Bildpunkt (S) liegen, geeignet sind.

**17.** System (1) gemäß Anspruch 15, wobei die Auswählmittel (12) eingerichtet sind zum Auswählen der überbelichteten Bildpunkte (S) Spalte für Spalte, wobei alle Bildpunkte der Bildpunktmatrix (M) durchlaufen werden, und zum Auslösen des Speicherns in der Speichereinheit (11) von Daten, die für die Tabellen (4) repräsentativ sind, die den nicht überbelichteten Bildpunkten entsprechen, wobei die Detektionsmittel (13) zum Verwenden der gespeicherten Daten zum Detektieren der nicht überbelichteten Bildpunkte (300), die am nächsten bei einem überbelichteten Bildpunkt (S) liegen, geeignet sind.

**18.** System (1) gemäß einem der Ansprüche 12 bis 17, wobei die Auswählmittel (12) eingerichtet sind zum Speichern der Positionsdaten (20) der nicht überbelichteten Bildpunkte, wobei die Daten (20) für Speicherzeilen (22) repräsentativ sind, die jeweils einer bestimmten Zeile der Bildpunktmatrix (M) entsprechen und auf der einen Seite die Spaltennummer (21) des ersten nicht überbelichteten Bildpunktes der bestimmten Zeile in Richtung nach links und auf der anderen Seite die Zeilennummern (220) von jedem der positionierten nicht überbelichteten Bildpunkte in Richtung nach oben nahe bei der bestimmten Zeile übertragen.

**19.** System (1) gemäß einem der Ansprüche 12 bis 18, wobei die Mittel zum Umwandeln (15) von Daten zum Verwenden eines Dämpfungskoeffizienten, der streng kleiner als 1 ist, der in der Speichereinheit (11) parametrisiert und gespeichert ist, zum Herabsetzen des Wertes der Luminanzkomponente (L) gemäß einem Programm oder einem Schaltkreis unter Anwendung der folgenden Gleichung geeignet sind:

$$Y = Y\,Schwelle + (y - Y\,Schwelle)*K$$

wobei Y die gedämpfte Luminanz des überbelichteten Bildpunktes (S) bezeichnet, y die nicht gedämpfte Luminanz bezeichnet, Y Schwelle die festgesetzte Schwelle (3) bezeichnet und K den Dämpfungskoeffizienten bezeichnet, der deutlich kleiner als 1 ist.

**20.** System (1) gemäß Anspruch 19, wobei die für die Luminanzkomponente (L) festgesetzte Schwelle (3) für eine Dynamik zwischen 0 und 255 zwischen 185 und 220 liegt, und wobei der Dämpfungskoeffizient zwischen 0,6 und 0,95 liegt.

FIG. 1

**FIG. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2357001 A
- US 6510242 B
- US 20020150306 A

**Littérature non-brevet citée dans la description**

- **Harley Alan L ; Cohen Harvey A.** Colour image restoration by nearest good neighbour method. *Conférence proceedings DICTA-93, Digital Image Computing : Techniques and Applications,* Décembre 1993, vol. 2, 745-747